**Europäisches Patentamt**

**European Patent Office**

**Office européen des brevets**

(11) Veröffentlichungsnummer: **0 042 549**

**A2**

(12) # EUROPÄISCHE PATENTANMELDUNG

(21) Anmeldenummer: **81104505.3**

(22) Anmeldetag: **11.06.81**

(51) Int. Cl.³: **H 01 B 12/00**
**H 01 L 39/02**

(30) Priorität: **25.06.80 DE 3023856**

(43) Veröffentlichungstag der Anmeldung:
**30.12.81 Patentblatt 81/52**

(84) Benannte Vertragsstaaten:
**CH FR GB IT LI**

(71) Anmelder: **SIEMENS AKTIENGESELLSCHAFT Berlin
und München
Postfach 22 02 61
D-8000 München 22(DE)**

(72) Erfinder: **Ries, Günter, Dr.
Burgunderweg 17
D-7504 Weingarten(DE)**

(54) **Kabelförmiger, kryogen stabilisierter Hochstromsupraleiter.**

(57) Ein kabelförmiger, kryogen stabilisierter Hochstromsupraleiter enthält mehrere supraleitende Elemente mit in ein Matrixmaterial vorbestimmter elektrischer Leitfähigkeit eingebetteten Leiteradern aus supraleitendem Material, mehrere parallel zu ihnen verlaufende Stabilisierungselemente aus thermisch und elektrisch gut leitendem, bei der Betriebstemperatur des Supraleiters elektrisch normalleitendem Material, dessen elektrische Leitfähigkeit im normalleitenden Zustand des Hochstromsupraleiters wesentlich größer als die des Matrixmaterials der supraleitenden Elemente ist, und mit einen Trägerkörper aus einem Material verhältnismäßig geringer thermischer und elektrischer Leitfähigkeit, auf dem die Stabilisierungselemente und die supraleitenden Elemente befestigt sind. Dieser Hochstromsupraleiter soll verhältnismäßig wenig Stabilisierungsmaterial enthalten, gut zu kühlen sein und geringe Wechselfeldverluste haben. Die Erfindung sieht hierzu vor, daß die Stabilisierungselemente (6) von den jeweils benachbarten supraleitenden Elementen (3) mit einem vorbestimmten Abstand räumlich getrennt auf dem Trägerkörper (8) angeordnet sind und daß die so zwischen benachbarten supraleitenden Elementen (3) und Stabilisierungselementen (6) ausgebildeten Zwischenräume (10) zumindest großenteils von einem kryogenen Kühlmittel ausgefüllt sind. Vorteilhaft ist die elektrische Leitfähigkeit des Matrixmaterials der supraleitenden Elemente (3) mindestens eine 10er Potenz kleiner als die des Materials der Stabilisierungselemente (6).

Kabelförmiger, kryogen stabilisierter Hochstromsupraleiter

Die Erfindung bezieht sich auf einen kabelförmigen,
kryogen stabilisierten Hochstromsupraleiter mit mehreren
supraleitenden Elementen, die in ein Matrixmaterial vorbestimmter elektrischer Leitfähigkeit eingebettete Leiteradern aus supraleitendem Material enthalten, mit
mehreren parallel zu ihnen verlaufenden Stabilisierungselementen aus thermisch und elektrisch gut leitendem,
bei der Betriebstemperatur des Supraleiters elektrisch
normalleitendem Material, dessen elektrische Leitfähigkeit im normalleitenden Zustand des Hochstromsupraleiters wesentlich größer als die des Matrixmaterials der
supraleitenden Elemente ist, und mit einem Trägerkörper
aus einem Material verhältnismäßig geringer thermischer
und elektrischer Leitfähigkeit, auf dem die Stabilisierungselemente und die supraleitenden Elemente befestigt
sind. Ein entsprechender Hochstromsupraleiter ist aus
der DE-AS 27 36 157 bekannt.

Das supraleitende Material der Leiteradern der entsprechenden Elemente des bekannten Hochstromsupraleiters
kann insbesondere eine intermetallische Verbindung vom
Typ $A_3B$ mit A15-Kristallstruktur wie beispielsweise
$Nb_3Sn$ oder $V_3Ga$ sein. Die Elemente enthalten deshalb
jeweils eine Vielzahl von in eine Bronze-Matrix eingelagerten Filamenten aus einer solchen intermetallischen
Verbindung. Derartige Hochstromsupraleiter haben gute

Slm 2 Hag / 18. 6. 1980

Supraleitungseigenschaften, zeichnen sich durch hohe kritische Werte aus und sind deshalb besonders für Magnetwicklungen zum Erzeugen starker Magnetfelder geeignet. Neben den genannten supraleitenden Binärverbindungen können auch Ternärverbindungen wie beispielsweise Niob-Aluminium-Germanium $Nb_3Al_{0,8}Ge_{0,2}$ als Leitermaterialien vorgesehen sein.

Zur Gewährleistung eines ungestörten Dauerbetriebs einer mit Supraleitern versehenen Einrichtung wie z.B. einer Magnetspule oder eines Kabels kann eine sogenannte kryogene Stabilisierung vorgesehen werden. Gemäß dieser bekannten Stabilisierungsart wird dem supraleitenden Material des Leiters elektrisch und thermisch gut leitendes Material wie z.B. Kupfer oder Aluminium beigefügt. Durch eine gute Kühlung dieses normalleitenden Materials erreicht man, daß eine normalleitend gewordene Stelle im supraleitenden Material ohne Betriebsunterbrechung in den supraleitenden Zustand zurückgeführt werden, d.h. die Temperatur trotz aufrechterhaltenem Strom unter die Sprungtemperatur des supraleitenden Materials wieder absinken kann.

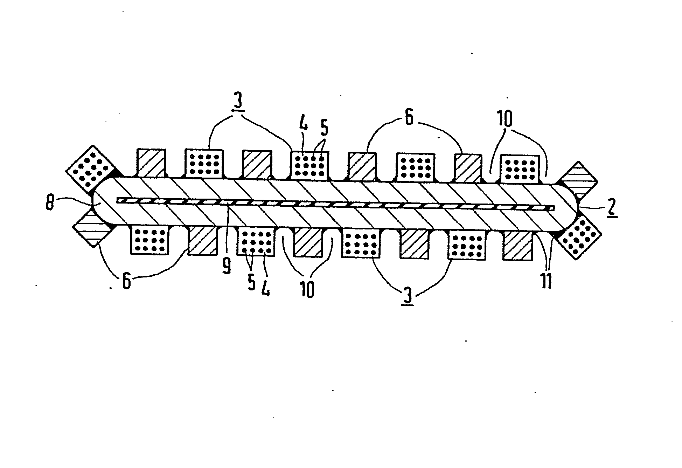

Bei dem aus der DE-AS 27 36 157 bekannten Hochstromsupraleiter wird die Stabilisierung der supraleitenden Elemente dadurch erreicht, daß parallel zu den supraleitenden Elementen noch besondere Stabilisierungselemente aus normalleitendem Material angeordnet sind. Stabilisierungselemente und supraleitende Elemente sind um einen bandförmigen Trägerkörper, der beispielsweise aus einem Material hoher mechanischer Festigkeit wie Edelstahl bestehen kann, verseilt und auf diesem Band befestigt (Fig. 3). Dabei befinden sich benachbarte supraleitende und stabilisierende Elemente dieses Hochstromsupraleiters in innigem elektrischen und thermischen Kontakt, der sich z.B. aufgrund einer gemeinsamen Warmverformung zur Ausbildung des Leiters als Flachseil ergibt. Der bekannte Hochstromsupraleiter hat deshalb einen kleinen Querwiderstand, so daß er in zeitlich veränderlichen Magnetfeldern entsprechend große Verluste aufweist. Außerdem ist bei diesem Hochstromsupraleiter die erforderliche Querschnittsfläche an normalleitendem Metall um ein Vielfaches größer als die zum Stromtransport erforderliche Supraleiterfläche. Die mittlere Stromdichte dieses Leiters ist somit entsprechend begrenzt.

Aufgabe der vorliegenden Erfindung ist es deshalb, den Hochstromsupraleiter der eingangs genannten Art dahingehend zu verbessern, daß sein Bedarf an normalleitendem Stabilisierungsmetall verringert ist, die Anforderungen an die Kühlung vermindert sind und dennoch ein zuverlässiger und verlustarmer Betrieb auch bei Wechselfeldanwendungen gewährleistet ist. Außerdem soll dieser Leiter einen verhältnismäßig einfachen Aufbau haben.

Diese Aufgabe wird erfindungsgemäß dadurch gelöst, daß die Stabilisierungselemente von den jeweils benachbarten supraleitenden Elementen mit einem vorbestimmten Abstand räumlich getrennt auf dem Trägerkörper angeordnet sind und daß die so zwischen benachbarten supraleitenden Elementen und Stabilisierungselementen ausgebildeten Zwischenräume zumindest großenteils von einem kryogenen Kühlmittel ausgefüllt sind.

Bei dem Hochstromsupraleiter gemäß der Erfindung ist also eine räumliche Trennung der supraleitenden Elemente von den Stabilisierungselementen vorgesehen. Zwischen

0042549

diesen parallel angeordneten Elementen ist somit nur eine schlecht wärmeleitende Verbindung vorhanden. Außerdem besteht zwischen diesen Elementen eine mäßige ohmsche Kopplung, die beim Normalleitendwerden eines supraleitenden Elementes einen Übergang des Stromes in das parallel liegende Stabilisierungsmaterial erlaubt. Die normalleitenden Stabilisierungselemente haben dabei einen wesentlich geringeren elektrischen Längswiderstand als die supraleitenden Elemente, wenn diese normalleitend geworden sind, und übernehmen dann wegen der galvanischen Kopplung zwischen diesen Elementen den größten Teil des im gesamten Hochstromsupraleiter fließenden Stromes. Die dabei entstehende Stromwärme in den supraleitenden Elementen ist wegen der geringen Leitfähigkeit klein, und die Temperatur sinkt infolge der guten Kühlung von bis zu drei Seiten rasch unter die Sprungtemperatur des Supraleiters. Dabei ist die sich einstellende Temperatur in den normalleitenden Stabilisierungselementen im Gegensatz zu den bekannten Leiterausbildungen nur von geringem Einfluß auf das Erholungsverhalten des Gesamtleiters. Da außerdem der elektrische Querwiderstand des Hochstromleiters groß ist, sind seine Wechselfeldverluste entsprechend klein. Er kann deshalb insbesondere für Poloidal- und Torusfeldspulen in plasmaphysikalischen Geräten wie z.B. in Fusionsreaktoren verwendet werden.

Vorteilhafte Weiterbildungen des Hochstromsupraleiters nach der Erfindung gehen aus den Unteransprüchen hervor.

Zur weiteren Erläuterung der Erfindung und deren in den Unteransprüchen gekennzeichneten Weiterbildungen wird auf die Zeichnung Bezug genommen, in der ein Teil eines kabelförmigen Hochstromsupraleiters nach der Erfindung schematisch veranschaulicht ist.

Der in der Figur in einem Querschnitt dargestellte, allgemein mit 2 bezeichnete Hochstromsupraleiter enthält mehrere, z.B. zehn parallel zueinander angeordnete supraleitende Leiterelemente 3. Jedes dieser Leiterelemente besteht aus einer Matrix 4, in der eine Vielzahl von supraleitenden Drähten 5 eingelagert sind. Das supraleitende Material dieser Drähte kann vorteilhaft einen im Vergleich zum Matrixmaterial verhältnismäßig großen Anteil der gesamten Querschnittsfläche der Elemente 3 einnehmen. Als Matrixmaterial wird vorteilhaft ein Material verwendet, das eine vorbestimmte elektrische Leitfähigkeit hat, die insbesondere bei der Betriebstemperatur des Leiters wesentlich kleiner als die von Kupfer oder Aluminium ist. Entsprechende supraleitende Leiterelemente können beispielsweise sogenannte Multifilamentdrähte mit Niob-Titan-Filamenten sein, die in einer Kupfer-Nickel-Matrix eingebettet sind. Auch $Nb_3Sn$-Filamente in einer reinen Bronzematrix oder ein Bündel von mit Niobcarbonitrid beschichteten Kohlenstoffasern können als supraleitende Elemente 3 vorgesehen sein. Die Elemente haben jeweils etwa rechteckige Querschnittsformen. Jedoch können auch entsprechende Elemente mit anderen, beispielsweise runden Querschnittsformen vorgesehen sein.

Zwischen benachbarten supraleitenden Leiterelementen 3 sind jeweils Leiterelemente 6 aus einem elektrisch gut leitenden, bei der Betriebstemperatur des Hochstromsupraleiters elektrisch normalleitenden Stabilisierungsmaterial wie z.B. Kupfer angeordnet. Die elektrische Leitfähigkeit dieser Stabilisierungselemente, die beispielsweise etwa die gleiche Querschnittsform wie die supraleitenden Elemente 3 haben, ist dabei wesentlich größer als die des Matrixmaterials der supraleitenden Elemente. Vorteilhaft ist sie mindestens eine 10er Potenz größer. Die supraleitenden Elemente 3 und die normalleitenden Stabilisierungselemente 6 sind um einen bandförmigen Trägerkörper 8 verseilt. Dieser Trägerkörper besteht zweckmäßig aus einem unmagnetischen Material hoher mechanischer Festigkeit und verhältnismäßig geringer elektrischer und thermischer Leitfähigkeit wie z.B. aus Edelstahl. Er enthält vorteilhaft eine isolierende Mittelebene 9.

Gemäß der Erfindung sollen die supraleitenden Elemente 3 und die normalleitenden Stabilisierungselemente 6 an den Außenseiten des Trägerkörpers 8 so gegenseitig beabstandet befestigt sein, daß zwischen jeweils benachbarten Elementen ein vorbestimmter Zwischenraum 10 ausgebildet ist. Beispielsweise sind die Elemente 3 und 6 auf dem Trägerkörper 8 mit einem hochresistiven Lot 11 aufgelötet oder auch aufgeschweißt. Vorteilhaft lassen sich die zwischen jeweils benachbarten Elementen verbleibenden Zwischenräume 10 vollständig von einem die supraleitenden Elemente 3 auf ihrer vorbestimmten Betriebstemperatur haltenden kryogenen Kühlmittel, beispielsweise mit flüssigem Helium, ausfüllen.

Darüber hinaus kann der so als Flachseil ausgebildete, in der Figur veranschaulichte Hochstromsupraleiter 2 gegebenenfalls von einer nicht gezeigten kühlmitteldichten Hülle aus einem Material hoher Festigkeit wie z.B. Edelstahl umschlossen sein. Es ergibt sich so ein Hohlleiter, der von dem kryogenen Kühlmittel forciert zu durchströmen ist. Hüllen entsprechend ausgebildeter Supraleiter sind z.B. aus der DE-OS 26 26 914 oder der DE-OS 28 09 573 bekannt. Neben einer forcierten Kühlung in derartigen Hohlleitern ist aber auch eine Badkühlung der Hochstromsupraleiter 2 möglich.

Gemäß dem in der Figur dargestellten Ausführungsbeispiel eines Hochstromsupraleiters nach der Erfindung ist angenommen, daß die gesamte Querschnittsfläche aller normalleitenden Stabilisierungselemente 6 nur geringfügig kleiner als die gesamte Querschnittsfläche aller supraleitenden Elemente 3 ist. Es ist jedoch auch möglich, ein wesentlich kleineres Flächenverhältnis vorzusehen. Dabei können auch die rinnenartigen Zwischenräume 10 enger als dargestellt gewählt werden. Es ergibt sich so ein verhältnismäßig kompakter Leiteraufbau mit großer Stromtragfähigkeit.

Aufgrund der räumlichen Beabstandung der supraleitenden Elemente 3 von den ihnen jeweils benachbarten normalleitenden Elementen 6 wird eine sehr kleine thermische Kopplung und auch nur mäßige elektrische Kopplung der supraleitenden Drähte 4 von ihrem stabilisierenden Material erreicht. Lediglich der Trägerkörper 8, eventuelle Lotschichten und eine gegebenenfalls vorgesehene Leiterumhüllung können zu einer geringen Kopplung beitragen.

Bei Verwendung solcher Hochstromsupraleiter 2 in Magnetspulen werden deren normalleitende Stabilisierungselemente 6 und deren supraleitende Elemente 3 zweckmäßigerweise so bemessen, daß in der Magnetwicklung auftretende Druckkräfte quer zur Leiterachse allein von den Stabilisierungselementen 6 aufgenommen werden. Eine Schädigung der supraleitenden Elemente, insbesondere falls diese spröde intermetallische Verbindungen enthalten, kann somit vermieden werden. Außerdem sind dissipative Effekte, beispielsweise durch plastische Verformungen oder Leiterbewegungen, vorteilhaft auf die Stabilisierungselemente beschränkt, wo die daraus resultierende Temperaturerhöhung nicht zu einem Normalleitendwerden des supraleitenden Materials führt.

Die Hochstromsupraleiter nach der Erfindung lassen sich vorteilhaft für Einrichtungen mit Wechselfeldbelastungen verwenden, da die vorhandene geringe Wärmeleitung zwischen den supraleitenden Elementen und den ihnen jeweils zugeordneten Stabilisierungselementen immer auch eine geringe elektrische Querleitfähigkeit des Leiters bedeutet. Die durch Koppelströme verursachten Wechselfeldverluste sind so dementsprechend gering.

Aufgrund einer geringen Dissipation in den supraleitenden Elementen des Hochstromsupraleiters nach der Erfindung ergeben sich eine Reihe von Vorteilen. So kann beispielsweise der Anteil an Stabilisierungsmaterial verhältnismäßig klein gehalten werden. Die mittlere Stromdichte des Leiters ist dann dementsprechend erhöht. Ferner ist bei einer vorgesehenen Zwangskühlung des Leiters nur ein verhältnismäßig kleiner Wärmeübergangskoeffizient nötig. Es ist deshalb auch nur ein entsprechend kleiner Massenstrom an kryogenem Kühlmittel längs des Leiters und somit eine entsprechend geringe Pumpleistung erforderlich. Außerdem kann die gekühlte Oberfläche des normalleitenden, stabilisierenden Materials klein gehalten werden. Es werden dann nur wenige normalleitende Stabilisierungselemente oder Stabilisierungselemente mit verhältnismäßig kleiner Querschnittsfläche benötigt, und der Leiteraufbau wird somit kompakter und einfacher. Da außerdem supraleitende Elemente mit einem hohen Querschnittsflächenanteil an supraleitendem Material in einer Matrix aus schlecht leitendem, hartem Metall vorgesehen sein können, ergibt sich auch ein kleinerer Durchsatz beim Herstellungsprozeß des Leiters. Es können beispielsweise als supraleitende Elemente $Nb_3Sn$-Multifilamentleiter mit reiner Bronzematrix verwendet werden, wobei keine Probleme einer Diffusion von Zinn in das Stabilisierungsmaterial bei der erforderlichen Glühbehandlung
zur Ausbildung der supraleitenden Verbindung $Nb_3Sn$ auftreten.

Gemäß einem Ausführungsbeispiel soll die Joule'sche
Erwärmung eines bekannten Supraleiters, dessen normalleitendes Stabilisierungsmaterial sich in unmittelbarem thermischen Kontakt mit dem supraleitenden Material
befindet, mit der entsprechenden Erwärmung eines Hochstromsupraleiters nach der Erfindung verglichen werden.
Bei einem linearen Wärmeübergangskoeffizienten h, wie
z.B. bei einem zwangsgekühlten, als Hohlleiter ausgebildeten Hochstromsupraleiter gemäß der Erfindung, führt
die Joule'sche Wärme durch einen elektrischen Strom I
zu folgender Temperaturerhöhung $\Delta T_{SL}$ im Supraleiter:

$$\Delta T_{SL} = \frac{q_{SL}}{h} = \frac{I^2}{h \cdot P_{SL}} \cdot \frac{\sigma_{SL} \cdot A_{SL}}{(\sigma_{NL} \cdot A_{NL} + \sigma_{SL} \cdot A_{SL})^2}$$

Dabei sind q die durch die gekühlte Oberfläche ins Kühlmittel abgegebene spezifische Leistung, P die von dem
Kühlmittel bespülte Leiteroberfläche pro Längeneinheit,
$\sigma$ die spezifische elektrische Leitfähigkeit und A
die Querschnittsfläche. Mit den Indizes SL und NL ist
die entsprechende Größe der supraleitenden Elemente 3
bzw. normalleitenden Stabilisierungselemente 6 gekennzeichnet. Bei einem stabilisierten Supraleiter herkömmlicher Bauart, dessen normalleitendes Stabilisierungsmaterial sich in unmittelbarem thermischen Kontakt
mit dem supraleitenden Material befindet, ist hingegen
gemäß den für eine kryogene Stabilisierung bekannten
Beziehungen (vgl. z.B. IEEE Trans.Nucl.Sci., 1965,
NS-12, Seiten 367 - 372) die Temperaturerhöhung

$$\Delta T_{NL} = \frac{q_{NL}}{h} = \frac{I^2}{h \cdot P_{NL}} \cdot \frac{1}{\sigma_{NL} \cdot A_{NL}}$$

Diese Temperaturerhöhung ist dabei etwa gleich der Temperatuterhöhung $\Delta T_{SL}'$ des zugeordneten supraleitenden Materials, so daß gilt:

$$\Delta T_{NL} \approx \Delta T_{SL}'.$$

Für das supraleitende Material des Hochstromsupraleiters nach der Erfindung ergibt sich dann annähernd eine um den folgenden Faktor niedrigere Temperatur

$$\frac{\Delta T_{SL}}{\Delta T_{SL}'} \approx \frac{\sigma_{SL} \cdot A_{SL} \cdot P_{NL}}{\sigma_{NL} \cdot A_{NL} \cdot P_{SL}},$$

da angenommen ist, daß die elektrische Leitfähigkeit $\sigma_{SL}$ der Matrix der supraleitenden Elemente wesentlich kleiner als die entsprechende Leitfähigkeit $\sigma_{NL}$ der Stabilisierungselemente ist, so daß dann gilt:

$$\sigma_{NL} \cdot A_{NL} \gg \sigma_{SL} \cdot A_{SL}$$

8 Patentansprüche

1 Figur

<u>Patentansprüche</u>

1. Kabelförmiger, kryogen stabilisierter Hochstromsupraleiter mit mehreren supraleitenden Elementen, die in ein Matrixmaterial vorbestimmter elektrischer Leitfähigkeit eingebettete Leiteradern aus supraleitendem Material enthalten, mit mehreren parallel zu ihnen verlaufenden Stabilisierungselementen aus thermisch und elektrisch gut leitendem, bei der Betriebstemperatur des Supraleiters elektrisch normalleitendem Material, dessen elektrische Leitfähigkeit im normalleitenden Zustand des Hochstromsupraleiters wesentlich größer als die des Matrixmaterials der supraleitenden Elemente ist, und mit einem Trägerkörper aus einem Material verhältnismäßig geringer thermischer und elektrischer Leitfähigkeit, auf dem die Stabilisierungselemente und die supraleitenden Elemente befestigt sind, d a d u r c h   g e k e n n z e i c h n e t , daß die Stabilisierungselemente (6) von den jeweils benachbarten supraleitenden Elementen (3) mit einem vorbestimmten Abstand räumlich getrennt auf dem Trägerkörper (8) angeordnet sind und daß die so zwischen benachbarten supraleitenden Elementen (3) und Stabilisierungselementen (6) ausgebildeten Zwischenräume (10) zumindest großenteils von einem kryogenen Kühlmittel ausgefüllt sind.

2. Hochstromsupraleiter nach Anspruch 1, g e k e n n - z e i c h n e t   durch einen metallischen Trägerkörper (8), auf dem die supraleitenden Elemente (3) und die Stabilisierungselemente (6) mit einem hochresistiven Lot (11) aufgelötet sind.

3. Hochstromsupraleiter nach Anspruch 1 oder 2, g e k e n n z e i c h n e t   durch einen bandförmigen

Trägerkörper (8) mit einer Mittelebene (9) aus einem isolierenden Material.

4. Hochstromsupraleiter nach einem der Ansprüche 1 bis 3, g e k e n n z e i c h n e t durch ein Matrixmaterial der supraleitenden Elemente (3), dessen elektrische Leitfähigkeit mindestens um eine 10er-Potenz kleiner ist als die des normalleitenden Materials der Stabilisierungselemente (6).

5. Hochstromsupraleiter nach einem der Ansprüche 1 bis 4, g e k e n n z e i c h n e t durch supraleitende Elemente (3) mit einer Matrix (4) aus Kupfer-Zinn-Bronze und supraleitenden Leiteradern (5) aus $Nb_3Sn$.

6. Hochstromsupraleiter nach einem der Ansprüche 1 bis 4, g e k e n n z e i c h n e t durch supraleitende Elemente (3) mit einer Matrix (4) aus einer Kupfer-Nickel-Legierung und supraleitenden Leiteradern (5) aus einer Niob-Titan-Legierung.

7. Hochstromsupraleiter nach einem der Ansprüche 1 bis 4, g e k e n n z e i c h n e t durch supraleitende Elemente (3) aus Bündeln von mit Niobcarbonitrid beschichteten Kohlenstoffasern.

8. Hochstromsupraleiter nach einem der Ansprüche 1 bis 7, g e k e n n z e i c h n e t durch eine Ausbildung als Hohlleiter mit einer kühlmitteldichten Umhüllung aus einem unmagnetischen Material.